# NEUE EUROPÄISCHE PATENTSCHRIFT

(11) **EP 2 636 294 B2**
(45) Veröffentlichungstag und Bekanntmachung des Hinweises auf die Entscheidung über den Einspruch: **16.08.2017**
(45) Hinweis auf die Patenterteilung: 08.10.2014
(21) Anmeldenummer: 13153212.9
(22) Anmeldetag: 30.01.2013
(51) Int. Cl.: A01C 7/20

(54) **Energieabsorptionseinrichtung im oder am Förderkanal eines Schars**
Energy absorption device for a feed channel of a blade
Installation d'absorption d'énergie pour un canal d'acheminement d'un soc

(30) Priorität: 07.03.2012 DE 102012101926
(43) Veröffentlichungstag der Anmeldung: 11.09.2013
(73) Patentinhaber: Kverneland AS, 4355 Kvernaland (NO)
(72) Erfinder: Budde, Michael, 59609 Anröchte (NO)
(74) Vertreter: Schweiger, Johannes

(56) Entgegenhaltungen:
- DE-C1- 19 748 036
- JP-A- 2003 160 214
- US-A- 5 522 328
- US-A1- 2002 088 383
- US-A1- 2004 244 658
- US-B1- 7 814 849
- US-B2- 7 854 205

## Beschreibung

Die Erfindung betrifft einen an einer Zuführleitung eines Schars für Körner festlegbaren oder vorgesehenen Mündungsabschnitt zum Umleiten der Körner von der Zuführleitung in Richtung einer von dem Schar geöffneten Furche gemäß Anspruch 1, sowie ein Schar gemäß Anspruch 10.

Ein bekanntes Scheibenschar mit Mündungsabschnitt ist in der DIE 10 2006 062 328 B3 beschrieben. Bei dem bekannten Scheibenschar ist eine Zuführleitung für Saatgut und/oder Dünger mit einem Mündungsabschnitt versehen, der zwischen zwei rotierbar angeordneten Scheiben des Scheibenschares angeordnet ist, so dass Saatgut und/oder Dünger über eine Leitfläche des Mündungsabschnittes in die von den Scheiben geöffnete Furche gelenkt wird. Dabei wird das Saatgut und/oder Dünger mittels eines Luftstroms durch die Zuführleitung transportiert. Während des Einsatzes des bekannten Scheibenschares kann es vorkommen, dass von der Leitfläche oder von seitlichen Flächen des Mündungsabschnittes Saatgut und/oder Dünger derart reflektiert wird, dass es außerhalb der von dem Scheibenschar geöffneten Furche abgelegt wird. Dasselbe kann auch bei einer mechanischen Verteilmaschine vorkommen.

Die US 7,854,205 B2 betrifft eine Kammer zum Verlangsamen von Partikeln in einem pneumatischen Förderkanal.

Hier setzt die Erfindung an. Aufgabe der Erfindung ist es, einen Mündungsabschnitt oder ein Schar bereitzustellen, bei dem die Anzahl fehlgeleiteter beziehungsweise außerhalb der Furche abgelegter Saat- und/oder Düngerkörner minimiert ist.

Die Aufgabe wird durch einen Mündungsabschnitt gemäß Anspruch 1 gelöst. Hinsichtlich des Schars wird die Aufgabe mit den Merkmalen des Anspruchs 10 gelöst.

Vorteilhafte Weiterbildungen der Erfindung sind in den Unteransprüchen angegeben. Soweit Wertebereiche angegeben sind, sollen auch innerhalb der genannten Grenzwerte liegende Werte als mitoffenbart gelten.

Der Erfindung liegt der Gedanke zugrunde, im oder am Förderkanal in einem Mündungsabschnitt eine Energieabsorptionseinrichtung vorzusehen und dieses derart anzuordnen und/oder auszubilden, dass Körner (auch in Granulatform, Linsenform oder ähnlichem), insbesondere Saatgut und/oder Dünger, welche von einer oder mehreren Leitflächen im Förderkanal oder einer anderen, insbesondere seitlichen Fläche des Mündungsabschnitts reflektiert werden, d.h. unkontrolliert abprallen, durch Absorption eines Teils der kinetischen Energie kontrolliert in Richtung der von dem Schar (insbesondere Scheiben eines Scheibenschars) geöffneten Furche oder in geordneter Bahn zurück auf die Leitfläche zu lenken, von der aus sie dann in die geöffnete Furche geleitet werden. Die Energieabsorptionseinrichtung ist demnach derart ausgebildet, dass sie verglichen mit einem herkömmlichen Förderkanal, an dem die Körner reflektieren und praktisch keine kinetische Energie absorbiert wird, mehr kinetische Energie aufnimmt oder absorbiert. Dies kann insbesondere durch Materialbeschaffenheit und/oder Oberflächenbeschaffenheit und/oder geometrische Form und/oder Anzahl von Energieabsorptionselementen eines Energieabsorptionsabschnitts der Energieabsorptionseinrichtung erreicht werden.

Beim erfindungsgemäßen Mündungsabschnitt ist es daher vorteilhaft, wenn dieser mehrteilig, insbesondere zweiteilig, vorzugsweise in Längsrichtung geteilt, ausgebildet ist.

Im Förderkanal werden Körner durch deren Gewichtskraft oder einen Förderstrom, insbesondere mit Luft, von einem Vorratsbehälter über Schlauch- oder Saatgutleiter und gegebenenfalls durch einen Verteiler durch den Förderkanal bis hin zu einer, insbesondere durch Scheiben eines Scheibenschars kurz zuvor geöffneten, Furche im Ackerboden gefördert. Dabei ist es von besonderer Bedeutung, dass die Körner gleichmäßig und definiert in der Furche auftreffen und nicht seitlich verspringen, so dass eine maximale Ausbeute und gleichmäßige Pflanzung/Düngung erfolgt.

Dabei ist es besonders vorteilhaft, wenn der Energieabsorptionsabschnitt, insbesondere die Energieabsorptionselemente, zumindest überwiegend, vorzugsweise vollständig innerhalb des Förderkanals angeordnet sind.

Weiterhin ist es von Vorteil, wenn die Energieabsorptionseinrichtung zumindest teilweise, vorzugsweise überwiegend an einer, insbesondere zumindest teilweise konkav geformten, äußeren Leitfläche des Förderkanals, insbesondere im Mündungsabschnitt, angeordnet/anordenbar ist. Dabei ist es weiterhin von Vorteil, wenn die Reduzierung der kinetischen Energie durch Zusammenwirken der Energieabsorptionseinrichtung mit dem Förderkanal, insbesondere mit der äußeren Leitfläche, bevorzugt mit einem konkaven Abschnitt der äußeren Leitfläche bewirkt wird.

Indem die Energieabsorptionseinrichtung sich zumindest teilweise, insbesondere zumindest überwiegend im Bereich des Energieabsorptionsabschnittes, an den Förderkanal anschmiegend ausgebildet ist, wird eine vorteilhafte Wechselwirkung der Energieabsorptionseinrichtung mit dem Förderkanal erreicht, bei der den Körnern nicht nur ein Teil ihrer kinetischen Energie entzogen wird, sondern auch deren Flugbahn verglichen mit der Reflexionswirkung eines herkömmlichen Förderkanals ohne Energieabsorptionseinrichtung schonender beeinflusst wird.

In Weiterbildung der Erfindung ist mit Vorteil vorgesehen, dass der Energieabsorptionsabschnitt derart ausgebildet ist, dass er leitend und/oder kanalisierend und/oder lenkend und/oder dämpfend auf die auf den Energieabsorptionsabschnitt treffenden Körner wirkt. Leitend im Sinne der vorliegenden Erfindung bedeutet, dass der Energieabsorptionsabschnitt zusätzlich zu der durch den Förderkanal vorgegebenen Begrenzung der Flugbahn jedes Korns leitend auf zumindest den überwiegenden Teil der Im Förderkanal strömenden Körner, insbesondere auf alle im Energieabsorptionsabschnitt auftreffenden Körner, wirkt. Die Merkmale kanalisierend und lenkend haben eine ebensolche Wirkung. Dämpfend im Sinne der vorliegenden Erfindung bedeutet, dass ein Teil der kinetischen Energie der Körner in der Energieabsorptionseinrichtung, insbesondere im Energieabsorptionsabschnitt, aufgenommen wird.

Alternativ oder zusätzlich hierzu ist es erfindungsgemäß vorgesehen, dass der Energieabsorptionsabschnitt durch die kinetische Energie der entlang des Energieabsorptionsabschnitts strömenden Körner, insbesondere in ihrer Größe und/oder Anordnung, beeinflussbare, insbesondere flexibel verformbare, Führungsbahnen aufweist. Erfindungsgemäße Führungsbahnen können insbesondere durch die Gestaltung des Energieabsorptionsabschnitts, insbesondere durch Ausbildung selbstähnlicher Energieabsorptionselemente, vorzugsweise in Längsrichtung entlang des Förderkanals verlaufend, vorgesehen sein.

Indem die Energieabsorptionseinrichtung erfindungsgemäß im Energieabsorptionsabschnitt mehrere, längliche, zumindest überwiegend, vorzugsweise vollständig, elastisch verformbare und/oder biegsame Energieabsorptionselemente aufweist, lässt sich diese hervorragend in bestehende Förderkanäle, insbesondere für Saatgut, integrieren, ohne eine wesentliche Beeinträchtigung des Durchsatzes/Volumenstroms der Körner. Die Elemente können eine unterschiedliche Länge aufweisen, um die Reduzierung der kinetischen Energie zu steuern. Durch die elastische Verformbarkeit und/oder Biegsamkeit der Energieabsorptionselemente können diese die kinetische Energie der auf die Energieabsorptionselemente treffenden Körner aufnehmen. Dabei ist es von Vorteil, wenn maximal 50 % der kinetischen Energie, mindestens jedoch 1 %, insbesondere mindestens 5%, bevorzugt mindestens 10%, der kinetischen Energie der Körner beziehungsweise jedes einzelnen Korns, aufgenommen wird.

In Weiterbildung der Erfindung ist es vorgesehen, dass die Energieabsorptionselemente parallel verlaufen. Auf diese Weise wird eine Kanalisierung der Körner entlang der Energieabsorptionselemente, insbesondere entlang deren Längsrichtung, bewirkt, so dass die Anzahl fehlgeleiteter beziehungsweise außerhalb der Furche abgelegter Körner minimiert wird.

Mit Vorteil ist es erfindungsgemäß vorgesehen, die Absorptionselemente im Befestigungsabschnitt zusammenlaufend anzuordnen, wobei diese insbesondere im Befestigungsabschnitt fixiert sind. Auf diese Weise ist eine platzsparende Unterbringung und einfache Herstellung der Energieabsorptionseinrichtung möglich.

Gemäß einer weiteren, vorteilhaften Ausführungsform der Erfindung ist es vorgesehen, dass die Energieabsorptionselemente zumindest in einem mittleren Abschnitt des Energieabsorptionsabschnitts quer (mindestens in einer Querrichtung) zur Längsrichtung der Energieabsorptionselemente beweglich ausgebildet sind. Somit können die Energieabsorptionselemente in dem Abschnitt, in dem Körner auf die Energieabsorptionseinrichtung treffen, durch Querbewegung, insbesondere in Kombination mit deren elastischer Verformbarkeit und/oder Biegsamkeit, gleichzeitig die kinetische Energie der Körner teilweise aufnehmen und leitend und/oder kanalisierend und/oder lenkend und/oder dämpfend auf diese einwirken.

Erfindungsgemäß ist es, wenn die Energieabsorptionselemente als im Befestigungsabschnitt gebündelte am gegenüberliegenden Ende frei schwingende, Borsten ausgebildet sind. Eine solche Energieabsorptionseinrichtung lässt sich einfach und kostengünstig herstellen und erfüllt die erfindungsgemäßen Aufgaben hervorragend. Auch ein Nachrüsten bestehender Förderkanäle ist auf einfache Weise, insbesondere durch Einkleben der Energieabsorptionseinrichtung im Befestigungsabschnitt, erfindungsgemäß denkbar.

Eine weitere Optimierung der Energieabsorptionseinrichtung wird erreicht, indem die Energieabsorptionselemente zumindest an deren Oberfläche, insbesondere durch Beschichtung, vorzugsweise mit einer Nanostruktur, und/oder Zugabe von Additiven, vorzugsweise Additiven zur Vermeidung elektrostatischer Aufladung, aus einem Material zur Vermeidung von Anhaftungen durch die auf die Energieabsorptionselemente auftreffenden Körner gebildet sind. Auch eine Aufrauhung der Oberfläche ist erfindungsgemäß denkbar, um die Wechselwirkung der Energieabsorptionselemente mit den Körnern zu beeinflussen.

Besonders vorteilhaft ist es, wenn die Energieabsorptionselemente aus abbrasionsbeständigem Material gebildet sind.

Soweit die Energieabsorptionselemente als Rotationskörper ausgebildet sind, wird eine Beschädigung der teils empfindlichen und teuren Körner, insbesondere Saatgut und/oder Dünger, vermieden.

Der erfindungsgemäße Mündungsabschnitt weist den Vorteil auf, dass dieser an eine Saatgutleitung eines Schars, insbesondere Scheibenschars, anbringbar ist und auf einfache Weise ausgetauscht werden kann, insbesondere beim Wechsel des zu fördernden Saatguts, so dass verschiedene Mündungsabschnitte mit verschiedenen Energieabsorptionseinrichtungen vorgesehen werden können. Außerdem wird ein Austausch der Energieabsorptionseinrichtung vereinfacht.

Der Mündungsabschnitt wird durch eine Ausführungsform verbessert, bei der ein Befestigungsabschnitt der Energieabsorptionseinrichtung stromaufwärts und ein Energieabsorptionsabschnitt der Energieabsorptionseinrichtung, insbesondere ein freischwingendes Ende von Energieabsorptionselementen der Energieabsorptionseinrichtung, stromabwärts angeordnet sind. Auf diese Weise ist eine einfache Befestigung der Energieabsorptionseinrichtung möglich, wobei gleichzeitig, insbesondere durch Befestigung des Befestigungsabschnitts in einer im Mündungsabschnitt vorgesehenen Tasche eine Störung des Förderstroms und Beschädigung der Körner praktisch ausgeschlossen wird.

Zur Vermeidung von Wiederholungen sollen sämtliche in Zusammenhang mit der zuvor beschriebenen Energieabsorptionselement, oder Mündungsabschnitt offenbarten Merkmale auch im Zusammenhang mit dem Schar als offenbart gelten. Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1: eine in Längsrichtung geschnittene Seitenansicht eines erfindungsgemäßen Mündungsabschnitts mit einer erfindungsgemäßen Energieabsorptionseinrichtung,
- Fig. 2a: eine perspektivische Ansicht des Mündungsabschnitts gemäß Figur 1 von schräg oben,
- Fig. 2b: eine in Längsrichtung geschnittene, perspektivische Ansicht gemäß Figur 2a,

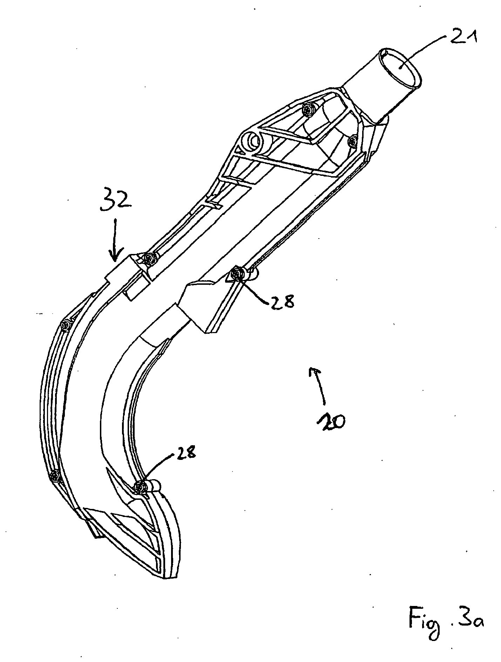

- Fig. 3a: eine perspektivische Ansicht des Mündungsabschnitts gemäß Figur 1 von schräg unten und

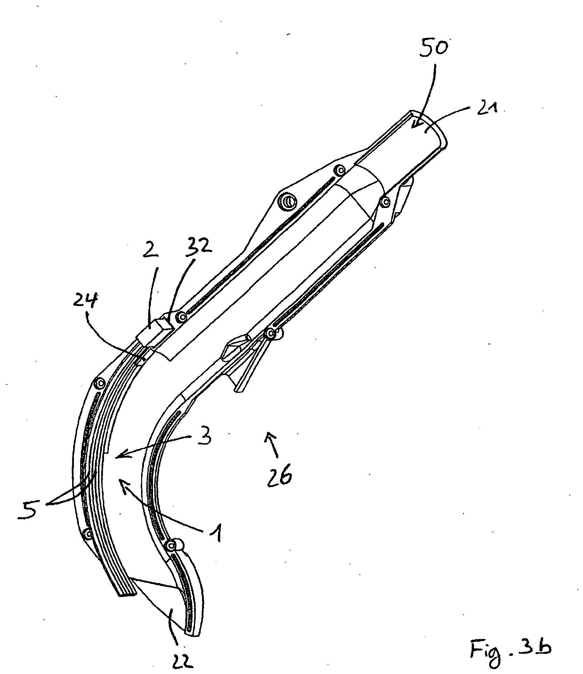

- Fig. 3b: eine in Längsrichtung geschnittene, perspektivische Ansicht gemäß Figur 3a.

In den Figuren sind gleiche Bauteile und Bauteile mit der gleichen Funktion mit den gleichen Bezugszeichen gekennzeichnet.

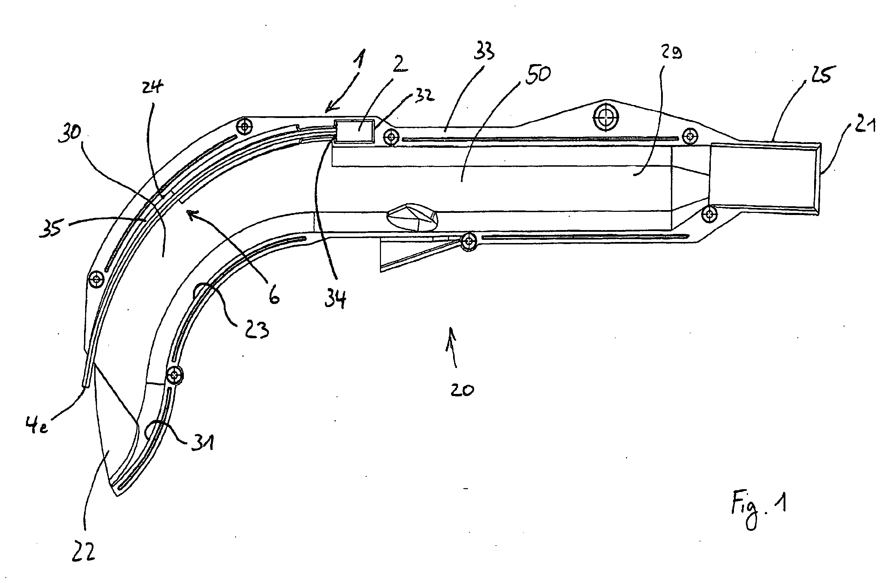

Figur 1 zeigt einen rohrförmigen Mündungsabschnitt 20, dessen Inneres einen Teil eines Förderkanals 50 bildet. Der Mündungsabschnitt 20 weist eine Eintrittsöffnung 21 auf, die an einem Anschlussstutzen 25 zum Anschluss des Mündungsabschnitts 20 an eine Saatgutleitung angeordnet ist. Der Förderkanal 50 verläuft von einem Vorratsbehältnis durch die Saatgutleitung und die Eintrittsöffnung 21 in den Mündungsabschnitt 20 bis zu einer gegenüberliegend zur Eintrittsöffnung 21 angeordneten Austrittsöffnung 22. Körner des Saatguts und/oder Dünger werden entlang des Förderkanals 50 von dem Vorratsbehältnis bis zu der Austrittsöffnung 22 gefördert, und zwar vorzugsweise pneumatisch. Sobald die Körner aus der Austrittsöffnung 22 strömen, sollen diese in geordneter Flugbahn in eine, insbesondere durch ein Schar geöffnete, Furche abgelegt werden.

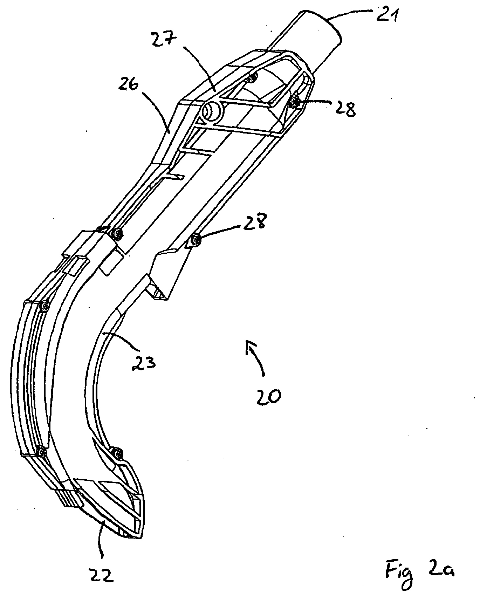

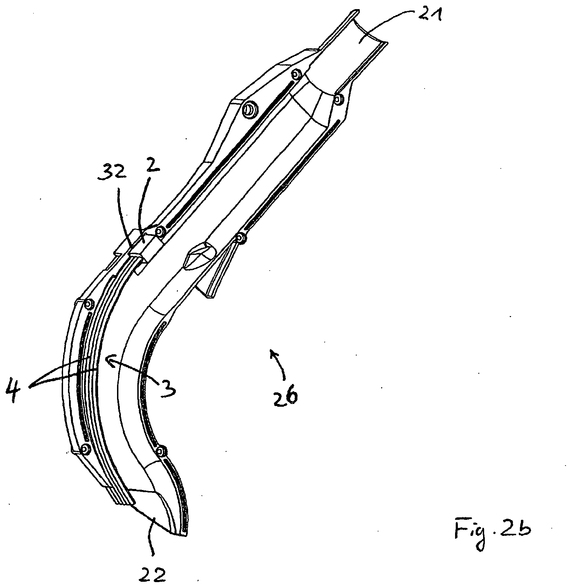

Der Mündungsabschnitt 20 besteht erfindungsgemäß aus zwei Hälften 26, 27 (siehe Figur 2a, 2b), die durch, insbesondere an Auskragungen des Mündungsabschnitts 20 angeordneten, vorzugsweise quer zu einer Förderrichtung wirkenden, Befestigungsmitteln 28, insbesondere Schrauben, aneinander, insbesondere dichtend, festlegbar sind. Die Befestigungsmittel 28 verlaufen erfindungsgemäß außerhalb des Förderkanals 50.

Der Mündungsabschnitt 20 verläuft zunächst von der Eintrittsöffnung 21 entlang eines geraden Förderabschnitts 29. An den geraden Förderabschnitt 29 schließt sich ein gekrümmter Endabschnitt 30 an, der bis zur Austrittsöffnung 22 verläuft und mindestens eine Krümmung aufweist.

Der gekrümmte Endabschnitt 30 weist eine innere Leitfläche 23 auf, die konvex gekrümmt ist und quasi die "Innenkurve" der Flugbahnen der Körner entlang des Förderkanals 50 im gekrümmten Endabschnitt 30 bildet. Gegenüberliegend zur inneren Leitfläche 23 weist der gekrümmte Endabschnitt 30 eine äußere Leitfläche 24 auf, die konkav ausgebildet ist und quasi die "Außenkurve" der Flugbahn der entlang des Förderkanals 50 strömenden Körner bildet. Die innere Leitfläche 23 verläuft bei der gezeigten Ausführungsform in Richtung der Austrittsöffnung 22 nach dem konvexen Hauptabschnitt der inneren Leitfläche 23 weiter in Richtung der Austrittsöffnung 22 und geht in einen konkaven Endabschnitt 31 über, so dass die innere Leitfläche quasi eine "S-Kurve" bildet.

Am Übergang des geraden Förderabschnitts 29 in den gekrümmten Endabschnitt 30 ist eine Befestigungsaufnahme 32 zur Aufnahme eines Befestigungsabschnitts 2 einer Energieabsorptionseinrichtung 1 vorgesehen. Die Befestigungsaufnahme 32 ist in einer Umfangswand 33 des Mündungsabschnitts 20 vorgesehen, die aus den Hälften 26, 27 gebildet ist. Dabei ist es vorteilhaft, wenn die Befestigungsaufnahme 32 aus beiden Hälften 26, 27 gebildet wird.

Die Befestigungsaufnahme 32 ist erfindungsgemäß als Tasche mit einer Taschenöffnung 34 in Richtung der äußeren Leitfläche 24 ausgebildet. Indem die Befestigungsaufnahme 32 die Energieabsorptionseinrichtung 1 in deren Befestigungsabschnitt 2 nur in geöffnetem (also zerlegtem) Zustand des Mündungsabschnitts 20 aufnehmen kann, erfolgt auf diese Weise eine einfache und sichere Befestigung der Energieabsorptionseinrichtung 1 in dem Mündungsabschnitt 20, ohne dass der Befestigungsabschnitt 2 in den Förderkanal 50 ragt und die Strömung der Körner beeinträchtigt.

Die Energieabsorptionseinrichtung 1 weist einen am Befestigungsabschnitt 2 beginnenden Energieabsorptionsabschnitt 3 auf, der zumindest teilweise, vorzugsweise überwiegend durch Energieabsorptionselemente 4 gebildet wird. Die Energieabsorptionselemente 4 werden in den Befestigungsabschnitt 2 befestigt, insbesondere durch Bündelung im Befestigungsabschnitt 2. Dies kann beispielsweise durch Pressung und/oder Kleben (oder einem vergleichbaren Fügeverfahren) der Energieabsorptionselemente 4 erfolgen.

Die Energieabsorptionselemente 4 verlaufen entlang der äußeren Leitfläche 24 bis zu einem freien Ende 4e der Energieabsorptionselemente 4, das im gezeigten Ausführungsbeispiel durch die Austrittsöffnung 22 aus dem Mündungsabschnitt 20 herausragt.

Indem die Energieabsorptionselemente 4 zumindest in einem mittleren Abschnitt 6 biegsam ausgebildet sind, schmiegen diese sich an die äußere Leitfläche 24 zumindest teilweise an, wobei zwischen der äußeren Leitfläche 24 und den Energieabsorptionselementen 4 ein Energieabsorptionsraum 35 ausgebildet wird.

Der Energieabsorptionsraum 35 dient als Puffer oder Freiraum für die Energieabsorptionselemente 4, sobald Körner auf den Energieabsorptionsabschnitt 3 auftreffen und die Energieabsorptionselemente 4 sich in den Energieabsorptionsraum 35 hinein verformen.

Durch die Verformung nehmen die Energieabsorptionselemente kinetische Energie der Körner auf. Indem die Energieabsorptionselemente 4 gleichzeitig Führungsbahnen 5, insbesondere zwischen benachbarten Energieabsorptionselementen 4, ausbilden, werden die auf den Energieabsorptionsabschnitt 3 auftreffenden Körner entlang der Energieabsorptionselemente 4 umgeleitet und in Richtung der Furche gelenkt beziehungsweise kanalisiert. Gleichzeitig wirken die Energieabsorptionselemente 3 beim Auftreffen der Körner auf die Energieabsorptionselemente 4 dämpfend auf die Körner.

### Bezugszeichenliste

- 1: Energieabsorptionseinrichtung
- 2: Befestigungsabschnitt
- 3: Energieabsorptionsabschnitt
- 4: Energieabsorptionselemente
- 4e: Ende
- 5: Führungsbahnen
- 6: mittleren Abschnitt
- 20: Mündungsabschnitt
- 21: Eintrittsöffnung
- 22: Austrittsöffnung
- 23: Innere Leitfläche
- 24: Äußere Leitfläche
- 25: Anschlußstutzen
- 26: Hälfte
- 27: Hälfte
- 28: Befestigungsmittel
- 29: Gerader Förderabschnitt
- 30: Gekrümmter Endabschnitt
- 31: Endabschnitt
- 32: Befestigungsaufnahme
- 33: Umfangswand
- 34: Taschenöffnung
- 35: Energieabsorptionsraum
- 50: Förderkanal

## Patentansprüche

1. An einer Zuführleitung eines Schars für Körner festlegbarer oder vorgesehener Mündungsabschnitt (20) eines Förderkanals (50) zum Umleiten der Körner von der Zuführleitung in Richtung einer von dem Schar geöffneten Furche mit folgenden Merkmalen:
- einer Eintrittsöffnung (21) zur Zuführung der Körner in den Mündungsabschnitt (20),
- einer Austrittsöffnung (22) zur Zuführung der Körner zur Furche,
- einer zwischen der Eintrittsöffnung (21) und der Austrittsöffnung (22) angebrachten Energieabsorptionseinrichtung (1) mit:
a) einem Befestigungsabschnitt (2) zur Befestigung der Energieabsorptionseinrichtung (1) in oder an dem Förderkanal (50),
b) einem, insbesondere an den Befestigungsabschnitt (2) anschließenden, Energieabsorptionsabschnitt (3) zur Reduzierung der kinetischen Energie der im Förderkanal (50) strömenden Körner, **dadurch gekennzeichnet, dass**
die Energieabsorptionseinrichtung (1) sich zumindest teilweise, insbesondere zumindest überwiegend im Bereich des Energieabsorptionsabschnittes (3), an den Förderkanal (50) anschmiegend ausgebildet ist, wobei die Energieabsorptionseinrichtung (1) im Energieabsorptionsabschnitt (3) mehrere längliche, zumindest überwiegend elastisch verformbare und/oder biegsame Energieabsorptionselemente (4) aufweist, wobei die Energieabsorptionselemente (4) als im Befestigungsabschnitt (2) gebündelte, am gegenüberliegenden Ende frei schwingende Borsten ausgebildet sind.

2. Mündungsabschnitt nach Anspruch 1, wobei der Energieabsorptionsabschnitt (3) derart ausgebildet ist, dass er leitend und/oder kanalisierend und/oder lenkend und/oder dämpfend auf die auf den Energieabsorptionsabschnitt (3) treffenden Körner wirkt.

3. Mündungsabschnitt nach einem der vorhergehenden Ansprüche, wobei der Energieabsorptionsabschnitt (3) durch die kinetische Energie der entlang des Energieabsorptionsabschnitts (3) strömenden Körner, insbesondere in ihrer Größe und/oder Anordnung, beeinflussbare, insbesondere flexibel verformbare, Führungsbahnen (5) aufweist.

4. Mündungsabschnitt nach Anspruch 1, wobei die Energieabsorptionselemente (4) parallel verlaufen.

5. Mündungsabschnitt nach Anspruch 1, wobei die Energieabsorptionselemente (4) im Befestigungsabschnitt, insbesondere parallel, zusammenlaufen, insbesondere in diesem fixiert sind.

6. Mündungsabschnitt nach Anspruch 1, wobei die Energieabsorptionselemente (4) zumindest in einem mittleren Abschnitt (6) des Energieabsorptionsabschnitts (3) quer zur Längsrichtung der Energieabsorptionselemente (4) beweglich ausgebildet sind.

7. Mündungsabschnitt nach Anspruch 1, wobei die Energieabsorptionselemente (4) zumindest an deren Oberfläche, insbesondere durch Beschichtung, vorzugsweise mit einer Nanostruktur, und/oder Zugabe von Additiven, vorzugsweise Additiven zur Vermeidung elektrostatischer Aufladung, aus einem Material zur Vermeidung von Anhaftungen durch die auf die Energieabsorptionselemente (4) auftreffenden Körner gebildet sind.

8. Mündungsabschnitt nach Anspruch 1, wobei die Energieabsorptionselemente (4) als Rotationskörper ausgebildet sind.

9. Mündungsabschnitt nach Anspruch 1, bei dem ein Befestigungsabschnitt (2) der Energieabsorptionseinrichtung (1) stromaufwärts und ein Energieabsorptionsabschnitt (3) der Energieabsorptionseinrichtung (1), insbesondere ein frei schwingendes Ende (4e) von Energieabsorptionselementen (4), stromabwärts angeordnet sind.

10. Schar mit einem Förderkanal (50) für Körner, wobei im Förderkanal (50) ein Mündungsabschnitt (20) gemäß einem der vorhergehenden Ansprüche angeordnet ist, und wobei der Mündungsabschnitt (20) zum Umleiten der Körner im Förderkanal (50) in Richtung einer von dem Schar geöffneten Furche ausgebildet ist.

## Claims

1. An orifice portion (20) of a feeding channel (50) that can be fixed or provided on a feed line of a coulter for grains for diverting the grains to the feed line in the direction of a furrow opened by the coulter with the following features:
- an inlet opening (21) for feeding the grains into the orifice portion (20),
- an outlet opening (22) for feeding the grains to the furrow,
- an energy absorption device (1) attached between the inlet opening (21) and the outlet opening (22) having:
a) a fastening portion (2) for fastening the energy absorption device (1) in or on the feeding channel (50),
b) an energy absorption portion (3) to be in particular connected to the fastening portion (2) for reducing the kinetic energy of the grains flowing in the feeding channel (50) in the region of the energy absorption portion (3),
**characterized in that** the energy absorption device (1) is formed at least partially, in particular at least predominantly, adapting to the feeding channel (50) in the region of the energy absorption portion (3),
wherein the energy absorption device (1) in the energy absorption portion (3) comprises multiple elongated, at least predominantly elastically deformable and/or flexible energy absorption elements (4), wherein the energy absorption elements (4) formed as bristles which are in particular bundled in the fastening portion (2) are preferentially freely swinging on the end located opposite.

2. The orifice portion according to Claim 1, wherein the energy absorption portion (3) is designed in such a manner that it has a guiding and/or channelling and/or steering and/or damping effect on the grains striking the energy absorption portion (3).

3. The orifice portion according to any one of the preceding claims, wherein the energy absorption portion (3) comprises guide ways (5) which can be influenced in particular in their size and/or arrangement in particularly flexibly deformed through the kinetic energy of the grains flowing along the energy absorption portion (3).

4. The orifice portion according to Claim 1, wherein the energy absorption elements (4) run parallel.

5. The orifice portion according to Claim 1, wherein the energy absorption elements (4) meet in the fastening portion, in particular in parallel, in particular are fixed in the same.

6. The orifice portion according to Claim 1, wherein the energy absorption elements (4) at least in a middle portion (6) of the energy absorption portion (3) are formed moveable transversely to the longitudinal direction of the energy absorption elements (4).

7. The orifice portion according to Claim 1, wherein the energy absorption elements (4) are formed at least on their surface, in particular through coating, preferentially with a nanostructure and/or addition of additives, preferentially additives for avoiding electrostatic charging, from a material for avoiding build-up through the grains striking the energy absorption elements (4).

8. The orifice portion according to Claim 1, wherein the energy absorption elements (4) are formed as rotary bodies.

9. The orifice portion according to Claim 1, in which a fastening portion (2) of the energy absorption device (1) is arranged upstream and an energy absorption portion (3) of the energy absorption device (1), in particular a freely swinging end (4e) of energy absorption elements (4) are arranged downstream.

10. A coulter with a feeding channel (50) for grains, wherein in the feeding channel (50) an orifice portion (20) according to any one of the preceding claims is arranged, and wherein the orifice portion (20) is formed for diverting the grains in the feed channel (50) in the direction of a furrow opened by the coulter.

## Revendications

1. Section d'embouchure pouvant être fixée ou prévue au niveau d'une conduite d'acheminement d'un soc pour grains (20) d'un canal de convoyage (50) pour la déviation des grains depuis la conduite d'acheminement en direction d'un sillon ouvert par le soc, comportant les caractéristiques suivantes :
- une ouverture d'entrée (21) pour l'acheminement des grains dans la section d'embouchure (20),
- une ouverture de sortie (22) pour l'acheminement des grains vers le sillon,
- un dispositif d'absorption d'énergie (1) installé entre l'ouverture d'entrée (21) et l'ouverture de sortie (22) et comportant :
a) une section de fixation (2) pour la fixation du dispositif d'absorption d'énergie (1) au ou dans le canal de convoyage (50),
b) une section d'absorption d'énergie (3) se raccordant particulier à la section de fixation (2) pour réduire l'énergie cinétique des grains s'écoulant dans le canal de convoyage (50),
**caractérisée en ce que**
le dispositif d'absorption d'énergie (1) est réalisé de manière à épouser le canal de convoyage (50) au moins partiellement, en particulier au moins majoritairement au niveau de la section d'absorption d'énergie (3), le dispositif d'absorption d'énergie (1) présentant dans la section d'absorption d'énergie (3) plusieurs éléments d'absorption d'énergie oblongs, au moins majoritairement élastiquement déformables et/ou flexibles (4), les éléments d'absorption d'énergie (4) étant réalisés sous forme de soies regroupées dans la section de fixation (2) et oscillant librement à l'extrémité opposée.

2. Section d'embouchure selon la revendication 1, dans laquelle la section d'absorption d'énergie (3) est réalisée de manière à avoir un effet conducteur et/ou canalisateur et/ou directeur et/ou amortisseur sur les grains arrivant dans la section d'absorption d'énergie (3).

3. Section d'embouchure selon une des revendications précédentes, dans laquelle la section d'absorption d'énergie (3) présente des bandes de guidage (5), en particulier déformables souplement, en particulier pouvant subir une influence au niveau de leur taille et/ou disposition, par l'énergie cinétique des grains s'écoulant le long de la section d'absorption d'énergie (3).

4. Section d'embouchure selon la revendication 1, dans laquelle les éléments d'absorption d'énergie (4) s'étendent parallèlement.

5. Section d'embouchure selon la revendication 1, dans laquelle les éléments d'absorption d'énergie (4) convergent dans la section de fixation, en particulier parallèlement, et sont en particulier fixés dans celle-ci.

6. Section d'embouchure selon la revendication 1, dans laquelle les éléments d'absorption d'énergie (4) sont réalisés de manière à être mobiles du moins dans une section médiane (6) de la section d'absorption d'énergie (3) transversalement au sens longitudinal des éléments d'absorption d'énergie (4).

7. Section d'embouchure selon la revendication 1, dans laquelle les éléments d'absorption d'énergie (4) sont composés du moins à leur surface, en particulier par revêtement, de préférence avec une nanostructure, et/ou par adjonction d'additifs, de préférence des additifs pour la prévention de la charge électrostatique, d'un matériau pour la prévention des adhérences dues aux grains arrivant sur les éléments d'absorption d'énergie (4).

8. Section d'embouchure selon la revendication 1, dans laquelle les éléments d'absorption d'énergie (4) sont réalisés sous forme de corps rotatifs.

9. Section d'embouchure selon la revendication 1, dans laquelle une section de fixation (2) du dispositif d'absorption d'énergie (1) est disposée en aval et une section d'absorption d'énergie (3) du dispositif d'absorption d'énergie (1), en particulier une extrémité oscillant librement (4e) des éléments d'absorption d'énergie (4), en aval.

10. Soc comportant un canal de convoyage (50) pour des grains, une section d'embouchure (20) selon une des revendications précédentes étant disposée dans le canal de convoyage (50) et la section d'embouchure (20) étant conçue pour dévier les grains se trouvant dans le canal de convoyage (50) en direction d'un sillon ouvert par le soc.
